# EUROPÄISCHE PATENTANMELDUNG

(11) **EP 2 536 104 A1**
(43) Veröffentlichungstag der Anmeldung: **19.12.2012**
(21) Anmeldenummer: 11169797.5
(22) Anmeldetag: 14.06.2011
(51) Int. Cl.: H04L 29/08

(54) **Fernsteuerung einer technischen Anlage**

(71) Anmelder: SIEMENS AKTIENGESELLSCHAFT, 80333 München (DE)
(72) Erfinder: Häberlein, Joachim, 91077 Neunkirchen A.Brand (DE); Rodat, Torsten, 38104 Braunschweig (DE)

(57) **Zusammenfassung**

Die Erfindung betrifft ein Steuerungssystem (1) für eine technische Anlage (2). Das Steuerungssystem (1) umfasst anlageseitig Steuereinheiten (4.1 bis 4.5) zur Steuerung, Wartung und/oder Überwachung der technischen Anlage (2) und anlageextern ein Leitsystem (3) zur Fernsteuerung, Fernwartung und/oder Fernüberwachung der technischen Anlage (2). Ferner umfasst das Steuerungssystem (1) eine Datenverbindung (8) zwischen dem Leitsystem (3) und den Steuereinheiten (4.1 bis 4.5). Dabei sind die Steuereinheiten (4.1 bis 4.5) durch Fernzugriff mittels des Leitsystems (3) steuerbar und konfigurierbar.

## Beschreibung

Die Erfindung betrifft ein Steuerungssystem für eine technische Anlage, eine technische Anlage mit einem derartigen Steuersystem und ein Verfahren zur Steuerung einer technischen Anlage.

Mit den wachsenden technischen Möglichkeiten werden auch Steuerungen technischer Anlagen immer komplexer. Daher wird entsprechend qualifiziertes Personal benötigt, um auf Betriebsstörungen kompetent reagieren zu können. Die Bereithaltung bzw. schnelle Verfügbarkeit derartigen Personals ist aufwändig und kostenintensiv.

Der Erfindung liegt die Aufgabe zugrunde, ein verbessertes Steuerungssystem für eine technische Anlage und ein verbessertes Verfahren zur Steuerung einer technischen Anlage anzugeben.

Die Aufgabe wird erfindungsgemäß hinsichtlich des Steuerungssystems und einer entsprechenden technischen Anlage durch die Merkmale der Ansprüche 1 bzw. 6 und hinsichtlich des Verfahrens durch die Merkmale des Anspruchs 8 gelöst.

Vorteilhafte Ausgestaltungen der Erfindung sind Gegenstand der Unteransprüche.

Ein erfindungsgemäßes Steuerungssystem für eine technische Anlage umfasst anlageseitig, d.h. im Bereich der technischen Anlage, Steuereinheiten zur Steuerung, Wartung und/oder Über-wachung der technischen Anlage. Ferner umfasst sie anlageextern, d.h. außerhalb der technischen Anlage, ein Leitsystem zur Fernsteuerung, Fernwartung und/oder Fernüberwachung der technischen Anlage. Das Leitsystem und die Steuereinheiten sind durch eine Datenverbindung verbunden, wobei die Steuereinheiten durch Fernzugriff mittels des Leitsystems steuerbar und konfigurierbar sind.

Das Steuerungssystem ermöglicht somit die Steuerung, Wartung und Überwachung einer technischen Anlage per Fernzugriff von dem Leitsystem aus. Dadurch kann insbesondere Personal am Ort der technischen Anlage eingespart werden bzw. es braucht weniger häufig Personal zu der technischen Anlage entsandt werden. In Fällen, in denen dennoch Personal am Ort der technischen Anlage benötigt wird, kann dieses Personal außerdem über die Datenverbindung mit dem Leitsystem von anlageexternen Spezialisten qualifiziert beraten und unterstützt werden, so dass hochqualifiziertes Personal am Ort der technischen Anlage eingespart werden kann. Dadurch kann auch einem Fachkräftemangel entgegengewirkt werden.

Die Fernüberwachung, Fernwartung und Fernsteuerung ermöglicht, mittels des Leitsystems Störungen und auffällige Betriebszustände der technischen Anlage frühzeitig zu erkennen und schnell zu beheben. Der Fernzugriff auf eine technische Anlage hat zudem den Vorteil, dass der Ort, von dem aus auf die Anlage zugegriffen wird, flexibel ist und insbesondere geändert werden kann, und auch, dass von verschiedenen Orten auf die technische Anlage zugegriffen werden kann.

Das erfindungsgemäße Steuerungssystem ermöglicht nicht nur die Fernüberwachung, Fernwartung und Fernsteuerung der technischen Anlage in einem vorgegebenen Zustand. Darüber hinaus ermöglicht es auch Änderungen der technischen Anlage, indem die Steuereinheiten selbst per Fernzugriff konfiguriert werden. Dadurch können Betriebsparameter der technischen Anlage vorteilhaft aktualisiert oder sich ändernden Anforderungen per Fernzugriff angepasst werden.

Ferner können Zustands- und Leistungsdaten der technischen Anlage mittels des Leitsystems protokolliert, archiviert und ausgewertet werden. Insbesondere können aus derartigen Daten jederzeit Berichte generiert werden, beispielsweise Verfügbarkeits- und Nutzungsstatistiken und Informationen für Servicepersonal.

In einer bevorzugten Ausgestaltung umfasst das Steuerungssystem eine erste demilitarisierte Zone, über welche die Datenverbindung zwischen dem Leitsystem und den Steuereinheiten geführt ist.

Unter demilitarisierten Zonen (DMZ = Demilitarized Zone) werden Computersysteme verstanden, die Rechnernetzwerke mittels Firewalltechnik gegen jeweils wenigstens zwei andere Rechnernetzwerke abschirmen und vor unberechtigten Zugriffen schützen.

Durch die erste demilitarisierte Zone wird die Datenverbindung zwischen dem Leitsystem und der technischen Anlage bzw. den Steuereinheiten gesichert und insbesondere das Leitsystem gegen unberechtigte Zugriffe geschützt.

Vorzugsweise umfasst das Steuerungssystem ferner wenigstens eine zur ersten demilitarisierten Zone redundante zweite demilitarisierte Zone, über welche die Datenverbindung zwischen dem Leitsystem und den Steuereinheiten führbar ist.

Dadurch kann die Datenverbindung bei einem Ausfall oder einer Unerreichbarkeit der ersten demilitarisierten Zone vorteilhaft über eine zweite demilitarisierte Zone gesichert werden. Dies erhöht vorteilhaft die Ausfallsicherheit des Steuerungssystems.

Vorzugsweise ist mittels des Leitsystems wenigstens eine Steuereinheit ein- und ausschaltbar.

Dadurch kann wenigstens eine Steuereinheit, beispielsweise zu Wartungszwecken oder aus Sicherheitsgründen, per Fernzugriff aus- und später wieder eingeschaltet werden. Insbesondere ermöglicht dies per Fernzugriff die Installation oder den Austausch von Firmware oder Systemsoftware der Steuereinheit, wenn dazu ein Neustart der Steuereinheit erforderlich ist.

Des Weiteren ist mittels des Leitsystems vorzugsweise eine Firmware oder Systemsoftware oder Anwendungssoftware wenigstens einer Steuereinheit installierbar, deinstallierbar und/oder aktualisierbar.

Dies ermöglicht es, per Fernzugriff wesentliche Funktionen wenigstens einer Steuereinheit zu verändern oder zu erweitern und erhöht dadurch vorteilhaft die Flexibilität und Leistungsfähigkeit des Steuerungssystems.

Eine erfindungsgemäße technische Anlage weist ein erfindungsgemäßes Steuerungssystem und wenigstens einen über eine Steuereinheit des Steuerungssystems ansteuerbaren Aktor und/oder einen von einer Steuereinheit des Steuerungssystems auslesbaren Sensor auf.

Eine derartige technische Anlage kann mit den oben genannten Vorteilen ferngesteuert, ferngewartet und/oder fernüberwacht werden.

Insbesondere kann die technische Anlage eine Kompensationsanlage zur Reduzierung einer elektrischen Blindleistung umfassen.

Dadurch kann das Steuerungssystem insbesondere zur Fernüberwachung, Fernwartung und Fernsteuerung der Kompensationsanlage eingesetzt werden und die Reduzierung der elektrischen Blindleistung verbessern.

Bei dem erfindungsgemäßen Verfahren zur Steuerung einer technischen Anlage wird die technische Anlage mit Steuereinheiten zu ihrer Steuerung, Wartung und/oder Überwachung versehen, die Steuereinheiten werden über eine Datenverbindung mit einem anlagenexternen Leitsystem verbunden und die technische Anlage wird mittels des Leitsystems ferngesteuert, ferngewartet und/oder fernüberwacht, wobei die Steuereinheiten durch Fernzugriff mittels des Leitsystems gesteuert und konfiguriert werden.

Dabei wird die Datenverbindung vorzugsweise über eine erste demilitarisierte Zone zwischen dem Leitsystem und den Steuereinheiten geführt.

Ferner wird die Datenverbindung vorzugsweise über eine zur ersten demilitarisierten Zone redundante zweite demilitarisierte Zone geführt, wenn die erste demilitarisierte Zone ausfällt.

Die Vorteile des erfindungsgemäßen Verfahrens entsprechen den oben genannten Vorteilen eines erfindungsgemäßen Steuerungssystems.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
- FIG 1: schematisch ein Steuerungssystem für eine techni-sche Anlage, und
- FIG 2: schematisch eine Struktur einer Fernsteuerung einer technischen Anlage mittels eines Steuerungssystems.

Einander entsprechende Teile sind in allen Figuren mit den gleichen Bezugszeichen versehen.

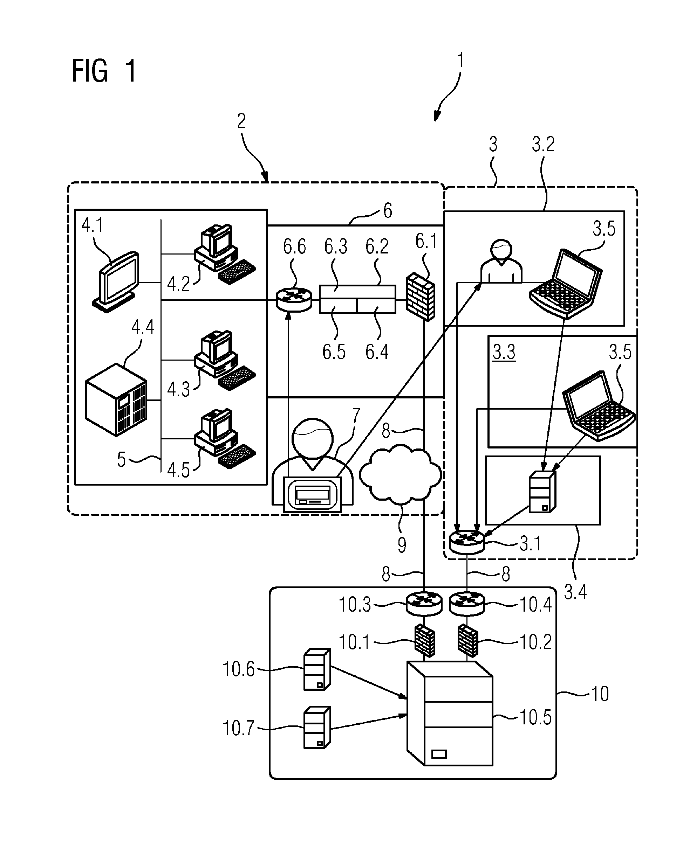

FIG 1 zeigt schematisch ein Steuerungssystem 1 für eine technische Anlage 2. Das Steuerungssystem 1 dient der Fernsteuerung, Fernwartung und Fernüberwachung der technischen Anlage 2. Dazu umfasst es anlageseitig, beispielsweise in einem Kontrollraum der technischen Anlage 2, Steuereinheiten 4.1 bis 4.5 zur Steuerung, Wartung oder Überwachung der technischen Anlage 2 und anlageextern ein Leitsystem 3, d.h. ein Leitsystem 3, das sich außerhalb der technischen Anlage 2 befindet und über das sich die technische Anlage 2 fernsteuern, fernwarten und fernüberwachen lässt.

Beispielsweise ist eine erste Steuereinheit 4.1 eine Benutzerschnittstelle zur Bedienung der technische Anlage 2, eine zweite Steuereinheit 4.2 eine Systemschnittstelle zum Zugriff auf Systemfunktionen und Änderung von Systemfunktionen der technischen Anlage 2, eine dritte Steuereinheit 4.3 eine Sensorschnittstelle zur Sammlung und Weiterleitung von Sensorsignalen von Sensoren der technischen Anlage 2, eine vierte Steuereinheit 4.4 eine speicherprogrammierbare Steuerung und eine fünfte Steuereinheit 4.5 eine Prozessdatenanalyseeinheit zur Sammlung und Auswertung von Prozessdaten der technischen Anlage 2.

Die Steuereinheiten 4.1 bis 4.5 sind über ein anlageinternes Netzwerk 5 mit Komponenten der technischen Anlage 2 vernetzt. Das anlageinterne Netzwerk 5 ist mit einer VPN-Schnittstelle 6 (VPN = Virtual Private Network) verbunden, über die von außen auf das anlageinterne Netzwerk 5 zugegriffen werden kann. Die VPN-Schnittstelle 6 umfasst im dargestellten Ausführungsbeispiel eine erste Firewall 6.1, ein Verbindungsgerät 6.2 mit Routingfunktionen 6.3, VPN-Funktionen 6.4 und NAT-Funktionen 6.5 (NAT = Network Address Translation) und eine erste Netzwerkkomponente 6.6 mit einer Schnittstelle, über die sich unter anderem ein Benutzer 7 mit dem anlageinternen Netzwerk 5 verbinden kann.

Das Leitsystem 3 ist über eine Datenverbindung 8 mit dem anlageinternen Netzwerk 5 verbunden. Die Datenverbindung 8 ist über das Internet 9 und eine zwischen dem Internet 9 und dem Leitsystem 3 angeordnete erste demilitarisierte Zone 10 geführt. Die Eingänge und Ausgänge der ersten demilitarisierten Zone 10 zu dem Internet 9 und dem Leitsystem 3 sind durch eine zweite bzw. dritte Firewall 10.1 und 10.2 gesichert und über eine zweite und dritte Netzwerkkomponente 10.3, 10.4 mit dem Internet 9 bzw. dem Leitsystem 3 über die Datenverbindung 8 verbunden. Die erste demilitarisierte Zone 10 weist eine Fernzugriffsplattform 10.5 auf, die den Fernzugriff auf die technische Anlage 2 ermöglicht und verwaltet, indem sie beispielsweise Authentifizierungsdaten prüft und verwaltet, Sicherheitsfunktionen wie Datenver- und -entschlüsselung übernimmt, Zugriffe aufzeichnet und auswertet und/oder Protokolle für die Datenübertragung bereitstellt. Dazu weist die Fernzugriffsplattform 10.5 einen Zugriffsserver 10.6 und einen Datenserver 10.7 auf.

Das Leitsystem 3 weist eine vierte Netzwerkkomponente 3.1 auf, über die es an die Datenverbindung 8 angeschlossen ist. Das Leitsystem 3 weist im dargestellten Ausführungsbeispiel ein Helpdesk 3.2 und eine Steuerungsplattform 3.3 auf, die jeweils Recheneinheiten 3.5 aufweisen, mittels derer über die Datenverbindung 8 und die Steuereinheiten 4.1 bis 4.5 zur Fernüberwachung, Fernwartung und Fernsteuerung auf die technische Anlage 2 zugegriffen werden kann. Dabei werden die Zugriffe von einem Zugangsportal 3.4 des Leitsystems 3 mittels Protokollen und Programmen koordiniert.

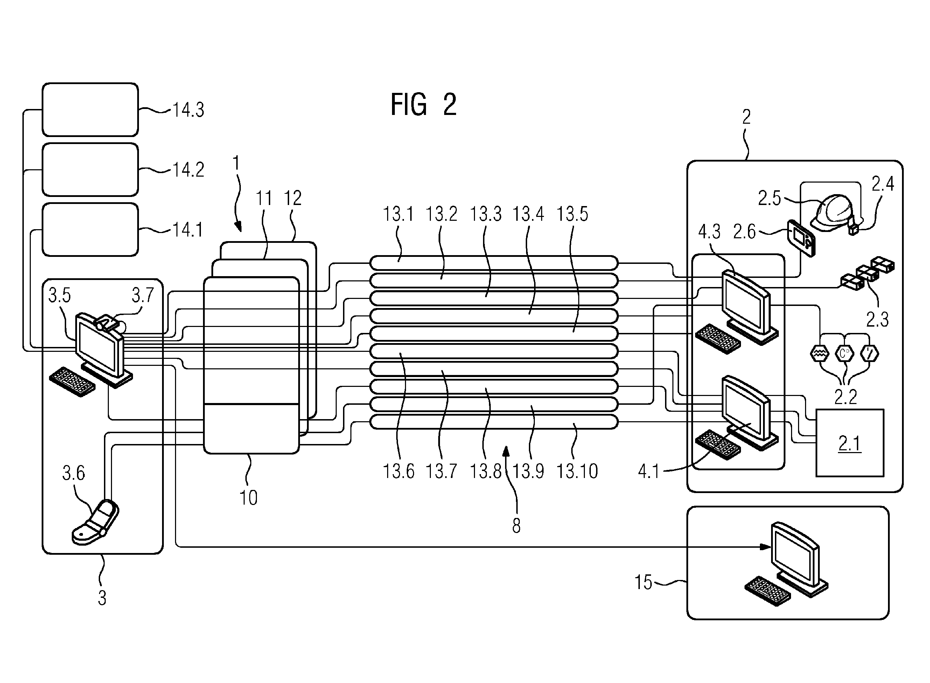

FIG 2 zeigt schematisch eine Struktur einer Fernsteuerung einer technischen Anlage 2 mittels eines Steuerungssystems 1, wie es in FIG 1 dargestellt ist.

Zusätzlich zur ersten demilitarisierten Zone 10 umfasst das Steuerungssystem 1 zwei zu der ersten demilitarisierten Zone 10 redundante zweite demilitarisierte Zonen 11, 12, die sich an anderen Orten als die erste demilitarisierte Zone 10 befinden können. Wenn die erste demilitarisierte Zone 10 ausfällt, wird die Datenverbindung 8 über eine dieser zweiten demilitarisierten Zonen 11, 12 geführt. Dadurch wird die Ausfallsicherheit der Datenverbindung 8 zwischen dem Leitsystem 3 und der technischen Anlage 2 erhöht.

Das Leitsystem 3 ist mit verschiedenen Abteilungen 14.1 bis 14.3 eines das Steuerungssystem 1 betreibenden Unternehmens verbunden, wobei beispielsweise eine erste Abteilung 14.1 ein Virenkompetenzzentrum zur Bekämpfung von Computerviren, eine zweite Abteilung 14.2 ein Produkt-Support und eine dritte Abteilung eine Entwicklungsabteilung 14.3 sind. Auf diese Weise können vorteilhaft einerseits Informationen und Mittel dieser Abteilungen 14.1 bis 14.3 zur Fernsteuerung, Fernüberwachung und Fernwartung der technischen Anlage genutzt werden, andererseits können die Abteilungen 14.1 bis 14.3 erforderlichenfalls selbst auf das Leitsystem 3 und darüber auf die technische Anlage 2 zugreifen.

Zur Fernsteuerung, Fernüberwachung und Fernwartung der technischen Anlage 2 stellt das Steuerungssystem 1 über die Datenverbindung 8 verschiedene Dienste 13.1 bis 13.10 bereit.

Ein erster Dienst 13.1 ermöglicht eine Online-Verbindung zwischen dem Leitsystem 3 und mobilen Geräten, die innerhalb der technischen Anlage 2 von technischem Personal mitgeführt werden können. Derartige mobile Geräte sind beispielsweise eine mobile Kamera 2.4, deren Aufnahmen dem Leitsystem 3 zugeführt werden und die beispielsweise an einem Schutzhelm 2.5 befestigt ist, und ein mobiles Kommunikationsgerät 2.6 mit einer Anzeigeeinheit, auf dem über das Leitsystem bereitgestellte Informationen angezeigt werden können, beispielsweise auch von einer Webcam 3.5 des Leitsystems 3 aufgenommene Kamerabilder. Auf diese Weise kann mit derartigen mobilen Geräten ausgestattetes technisches Personal der technischen Anlage direkt Informationen an das Leitsystem 3 übermitteln und von dem Leitsystem 3 aus, beispielsweise bei Wartungs- oder Überwachungsarbeiten, unterstützt werden.

Ein zweiter Dienst 13.2 ermöglicht die Fernadministration der Steuereinheiten 4.1 bis 4.5 von dem Leitsystem 3 aus. Dies schließt insbesondere die ferngesteuerte Ein- und Ausschaltbarkeit der Steuereinheiten 4.1 bis 4.5 und den vollen ferngesteuerten Zugriff auf Basic-Input-Output-Systeme (BIOS), Netzwerkeinstellungen und Betriebssysteme der Steuereinheiten 4.1 bis 4.5 ein.

Ein dritter Dienst 13.3 ermöglicht die Übertragung von Multimediadaten von der technischen Anlage 2 zu dem Leitsystem 3, beispielsweise die Übertragung von Videoaufnahmen oder Kamerabildern, die von Überwachungskameras 2.3 der technischen Anlage 2 aufgenommen werden, und/oder entsprechend von Audioaufnahmen.

Ein vierter Dienst 13.4 ermöglicht eine Aktualisierung von Virenschutz- und Anwendungssoftware für die Steuereinheiten 4.1 bis 4.5.

Ein fünfter Dienst 13.5 ermöglicht eine Modifikation von System- und Anlagensoftware der Steuereinheiten 4.1 bis 4.5.

Ein sechster Dienst 13.6 ermöglicht einen Fernzugriff auf die als Benutzerschnittstellen ausgebildeten Steuereinheiten 4.1.

Ein siebter Dienst 13.7 ermöglicht eine Zusammenstellung von Betriebsdaten der technischen Anlage 2. Dieser Dienst 13.7 kann um eine automatische Erzeugung von Berichten über den Betrieb und Zustand der technischen Anlage 2 und eine automatische Übertragung dieser Berichte an eine Sammelstelle, beispielsweise bei einem Anlagenbetreiber 15 der technischen Anlage 2, erweitert werden.

Ein achter Dienst 13.8 ermöglicht die Übertragung von Warnsignalen der technischen Anlage 2, beispielsweise von Warnsignalen einer Steuerung 2.1 der technischen Anlage 2 oder eines mobilen Kommunikationsgerätes 2.6, an das Leitsystem 3.

Ein neunter Dienst 13.9 ermöglicht die Übermittlung von Messsignalen, die von Messsensoren 2.2 der technischen Anlage 2 erfasst werden, an das Leitsystem 3, um die technische Anlage 2 zu überwachen. Derartige Messsensoren 2.2 können beispielsweise Temperatur-, Druck- oder Wassersensoren oder auch Überwachungssensoren für Türen, Fenster oder Schränke sein.

Ein zehnter Dienst 13.10 ermöglicht die Übertragung von Fehlermeldungen der technischen Anlage 2, beispielsweise von Fehlermeldungen einer Steuerung 2.1 der technischen Anlage 2, an das Leitsystem 3.

Besonders systemkritische Informationen aus der technischen Anlage 2, insbesondere Warnsignale des achten Dienstes 13.8, Überwachungsdaten des neunten Dienstes 13.9 und Fehlermeldungen des zehnten Dienstes 13.10, werden dabei vorzugsweise auch automatisch per E-Mail (= Electronic Mail) und/oder SMS (= Short Message Service) und/oder Telefontextmeldung an Servicemitarbeiter des Leitsystems 3, beispielsweise an ein Mobiltelefon 3.6 eines Servicemitarbeiters gesendet.

Obwohl die Erfindung im Detail durch ein bevorzugtes Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Steuerungssystem (1) für eine technische Anlage (2), umfassend anlageseitig Steuereinheiten (4.1 bis 4.5) zur Steuerung, Wartung und/oder Überwachung der technischen Anlage (2), anlageextern ein Leitsystem (3) zur Fernsteuerung, Fernwartung und/oder Fernüberwachung der technischen Anlage (2) und eine Datenverbindung (8) zwischen dem Leitsystem (3) und den Steuereinheiten (4.1 bis 4.5), wobei die Steuereinheiten (4.1 bis 4.5) durch Fernzugriff mittels des Leitsystems (3) steuerbar und konfigurierbar sind.

2. Steuerungssystem (1) nach Anspruch 1, **gekennzeichnet durch** eine erste demilitarisierte Zone (10), über welche die Datenverbindung (8) zwischen dem Leitsystem (3) und den Steuereinheiten (4.1 bis 4.5) geführt ist.

3. Steuerungssystem (1) nach Anspruch 2, **gekennzeichnet durch** wenigstens eine zur ersten demilitarisierten Zone (10) redundante zweite demilitarisierte Zone (11, 12), über welche die Datenverbindung (8) zwischen dem Leitsystem (3) und den Steuereinheiten (4.1 bis 4.5) führbar ist.

4. Steuerungssystem (1) nach einem der vorhergehenden Ansprüche, **dadurch gekennzeichnet, dass** mittels des Leitsystems (3) wenigstens eine Steuereinheit (4.1 bis 4.5) ein- und ausschaltbar ist.

5. Steuerungssystem (1) nach einem der vorhergehenden Ansprüche, **dadurch gekennzeichnet, dass** mittels des Leitsystems (3) eine Firmware oder Systemsoftware oder Anwendungssoftware wenigstens einer Steuereinheit (4.1 bis 4.5) installierbar, deinstallierbar und/oder aktualisierbar ist.

6. Technische Anlage (2) mit einem Steuerungssystem (1) gemäß einem der vorhergehenden Ansprüche und mit wenigstens einem über eine Steuereinheit (4.1 bis 4.5) des Steuerungssystems (1) ansteuerbaren Aktor und/oder einem von einer Steuereinheit (4.1 bis 4.5) des Steuerungssystems (1) auslesbaren Sensor (2.2, 2.3).

7. Technische Anlage (2) nach Anspruch 6, **gekennzeichnet durch** eine Kompensationsanlage zur Reduzierung einer elektrischen Blindleistung.

8. Verfahren zur Steuerung einer technischen Anlage (2), wobei die technische Anlage (2) mit Steuereinheiten (4.1 bis 4.5) zu ihrer Steuerung, Wartung und/oder Überwachung versehen wird, die Steuereinheiten (4.1 bis 4.5) über eine Datenverbindung (8) mit einem anlagenexternen Leitsystem (3) verbunden werden, die technische Anlage (2) mittels des Leitsystems (3) ferngesteuert, ferngewartet und/oder fernüberwacht wird, und die Steuereinheiten (4.1 bis 4.5) durch Fernzugriff mittels des Leitsystems (3) gesteuert und konfiguriert werden.

9. Verfahren nach Anspruch 8, **dadurch gekennzeichnet, dass** die Datenverbindung (8) über eine erste demilitarisierte Zone (10) zwischen dem Leitsystem (3) und den Steuereinheiten (4.1 bis 4.5) geführt wird.

10. Verfahren nach Anspruch 9, **dadurch gekennzeichnet, dass** die Datenverbindung (8) über eine zur ersten demilitarisierten Zone (10) redundante zweite demilitarisierte Zone (11, 12) geführt wird, wenn die erste demilitarisierte Zone (10) ausfällt.
